# EUROPÄISCHE PATENTSCHRIFT

(11) **EP 0 971 936 B1**
(45) Veröffentlichungstag und Bekanntmachung des Hinweises auf die Patenterteilung: **17.04.2002**
(21) Anmeldenummer: 98910710.7
(22) Anmeldetag: 20.02.1998
(51) Int. Cl.: C07F 9/30, C08K 5/5313

(54) **ALUMINIUMSALZE VON ALKYL-1-ALKOXYETHYLPHOSPHINSÄUREN**
ALKYL-1-ALKOXYETHYLPHOSPHINOUS ACID ALUMINIUM SALTS
SELS D'ALUMINIUM D'ACIDES ALKYLE-1-ALCOXYETHYLEPHOSPHINIQUES

(30) Priorität: 04.03.1997 DE 19708724
(43) Veröffentlichungstag der Anmeldung: 19.01.2000
(73) Patentinhaber: Ticona GmbH, 65451 Kelsterbach (DE)
(72) Erfinder: KLEINER, Hans-Jerg, D-61476 Kronberg (DE); JENEWEIN, Elke, D-86368 Gersthofen (DE); WANZKE, Wolfgang, D-86405 Meitingen (DE)
(86) Internationale Anmeldenummer: EP9800980
(87) Internationale Veröffentlichungsnummer: WO9839339

(56) Entgegenhaltungen:
- EP-A- 0 458 067
- EP-A- 0 699 708
- DE-A- 2 827 867
- DE-A- 2 915 116
- CHEMICAL ABSTRACTS, vol. 102, no. 2, 14.Januar 1985 Columbus, Ohio, US; abstract no. 008210, "Flameproofing textiles" XP002066269 & IL 60 453 * (YEDA RESEARCH AND DEVELOPMENT CO. LTD.;ISRAEL)

## Beschreibung

Die Erfindung betrifft neue Aluminiumsalze von Alkyl-1-alkoxyethylphosphinsäuren, ihre Herstellung und ihre Verwendung als Flammschutzmittel.

Polymere werden häufig dadurch flammfest gemacht, daß man diesen phosphorhaltige oder halogenhaltige Verbindungen oder Gemische davon zusetzt. Einige Polymere werden bei hohen Temperaturen, z. B. bei 250 °C oder höheren Temperaturen verarbeitet. Aus diesem Grund eignen sich viele bekannte Flammhemmer nicht für solche Anwendungen, weil sie zu flüchtig oder nicht ausreichend hitzebeständig sind.

Alkalisalze von Dialkylphosphinsäuren sind thermisch stabil und bereits als flammhemmende Zusätze für Polyester vorgeschlagen (DE-A1-2 252 258). Sie müssen in Mengen bis zu 30 Gew.-% eingebracht werden und haben zum Teil einen ungünstigen korrosionsfördemden Einfluß auf die Verarbeitungsmaschinen.

Weiterhin sind die Salze von Dialkylphosphinsäuren mit einem Alkalimetall oder einem Metall aus der zweiten oder dritten Haupt- oder Nebengruppe des Periodensystems zur Herstellung flammwidriger Polyamid-Formmassen eingesetzt worden, insbesondere die Zinksalze (DE-A1-2 447 727). Schwerentflammbare Thermoplaste lassen sich auch herstellen durch den Einsatz der genannten Phosphinsäuresalze in Kombination mit Stickstoffbasen wie Melamin, Dicyandiamid oder Guanidin (DE-A1-28 27 867).

Eine weitere große Klasse von Phosphinsäuresälzen sind die polymeren Metallphosphinate. Diese stellen nichtionische Koordinationskomplexe dar und sind in organischen Lösungsmitteln löslich. Sie sind als Flammschutzkomponenten geeignet für halogenierte aromatische Polymere sowie für Polyester (US 40 70 816; US 41 80 495), Polyamide (US 42 08 321) und Polyester/Polyamide (US 42 08 322).

EP 0 699 708 beschreibt Polyestern, die durch den Zusatz von Calcium - oder Aluminiumsalzen von Phosphin- oder Diphosphinsäuren flammhemmend ausgerüstet werden - Dialkylphosphinsäure werden hergestellt durch radikalisch katalysierte Anlagerung von Olefinen an Phosphonigsäuremonoester und die anschließende Hydrolyse der so gewonnenen Dialkylphosphinsäureester. Phosphonigsäuremonoester gewinnt man aus phosphonigen Säuren. Diese erhält man durch Hydrolyse von Dichlorphosphanen. Die Verfahren sind technisch aufwendig und verlaufen über mehrere Stufen. Gesucht sind daher technisch einfache Herstellverfahren für Salze von Phosphinsäuren, die von Dichlorphosphanen ausgehen.

Die Aufgabe wird gelöst durch neue Aluminiumsalze von Alkyl-1-alkoxyethyl-phosphinsäuren der allgemeinen Formel (I) 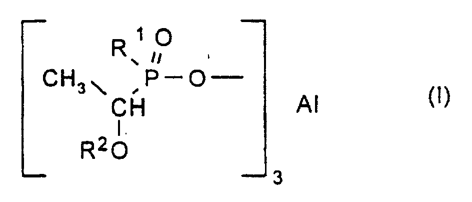 worin R¹ für einen geradkettigen oder verzweigten Alkylrest mit 1 bis 6 Kohlenstoffatomen, vorzugsweise Methyl, Ethyl, n-Propyl, iso-Propyl, n-Butyl oder tert.-Butyl, steht und R² für einen geradkettigen oder verzweigten Alkylrest mit 1 bis 4 Kohlenstoffatomen, vorzugsweise Methyl oder Ethyl steht, und ein Verfahren zur Herstellung der Aluminiumsalze der Formel (I), dadurch gekennzeichnet, daß man Alkyl-1-alkoxyethylphoshinsäuren der Formel (II) 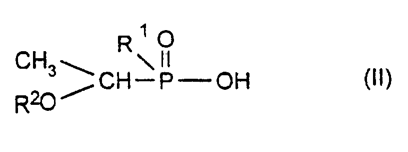 mit Aluminiumhydroxid im Molverhältnis 3 : 1 umsetzt.

Die Phosphinsäuren der Formel (II) werden nach bekannten Methoden aus Alkyldichlorphosphanen und Acetaldehyddiacetalen hergestellt (V.S. Tsivunin et al., Zh. Obshch. Khim. 40 (102) 1970, 12, 2560 (1970).

Beispielsweise wird Alkyl-dichlorphosphan mit Acetaldehyddiacetal umgesetzt zum Alkyl-1-alkoxyethylphosphinsäurechlorid, das anschließend zur entsprechenden Phosphinsäure hydrolysiert wird. Die gebildeten Phosphinsäuren werden dann mit Aluminiumhydroxid im Molverhältnis 3 : 1 nach bekannter Methode umgesetzt (EP-09 699 708). Dabei werden die Phosphinsäure und das Aluminiumhydroxid in Wasser bei 80 - 100°C solange gerührt, bis das Aluminiumphosphinat gemäß der Erfindung praktisch quantitativ gebildet worden ist. Vorzugsweise wird die Reaktion in geeigneten Lösungsmitteln oder Lösungsmittelgemischen durchgeführt, z.B. in Eisessig. Zur Verkürzung der Reaktionsdauer ist es auch möglich, die Herstellung der erfindungsgemäßen Phosphinsäuresalze unter Druck bei Temperaturen von 110 - 250°C durchzuführen.

Die Phosphinsäuresalze werden nach guter Trocknung, bevorzugt im Vakuum bei Temperaturen von 150 - 200°C, als Flammschutzmittel eingesetzt für polymere Formmassen, z.B. für Polyester wie Polybutylentherephthalat.

Polyester sind Polymere, die wiederholende, über eine Estergruppe verbundene Einheiten in der Polymerkette enthalten. Polyester, die erfindungsgemäß eingesetzt werden können, sind beispielsweise in "Ullmann's encyclopedia of industrial chemistry", ed. Barbara Elvers, Vol. A21, Kapitel 'Polyesters' (S. 227 - 251), VCH, Weinheim-Basel-Cambridge-New York 1992 beschrieben, worauf Bezug genommen wird.

Die Menge des den Polymeren zuzusetzenden Phosphinsäuresalzes der allgemeinen Formel (I) kann innerhalb weiter Grenzen variieren. Im allgemeinen verwendet man 5 bis 30 Gew.-%, bezogen auf das Polymer. Die optimale Menge hängt von der Natur des Polymeren und der Art des eingesetzten Phosphinsäuresalzes ab und kann durch Versuche leicht bestimmt werden.

Die Phosphinsäuresalze gemäß der Erfindung können je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Fall erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflußen sie den Herstellprozess der Polyesterformmasse. Die Phosphinsäuresalze sind unter Herstellungs- und Verarbeitungsbedingungen für Polymere nicht flüchtig.

Das Phosphinsäuresalz kann in das Polymer eingearbeitet werden, indem beides vermischt und anschließend in einem Compoundieraggregat (z.B. in einem Zweischneckenextruder) das Polymer aufgeschmolzen und das Phosphinsäuresalz in der Polymerschmelze homogenisiert wird. Die Schmelze kann als Strang abgezogen, gekühlt und granuliert werden. Das Phosphinsäuresalz kann auch direkt in das Compoundieraggregat dosiert werden.

Es ist ebenso möglich, die flammhemmenden Zusätze einem fertigen Polyestergranulat beizumischen und direkt auf einer Spritzgießmaschine zu verarbeiten oder vorher in einem Extruder aufzuschmelzen, zu granulieren und nach einem Trocknungsprozeß zu verarbeiten.

Der flammhemmende Zusatz kann auch während der Polykondensation zugegeben werden.

Den Einstellungen können neben den erfindungsgemäßen Phosphinsäuresalzen auch Füll- und Verstärkungsstoffe wie Glasfasern, Glaskugeln oder Mineralien wie Kreide zugesetzt werden. Daneben können die Produkte andere Zusätze wie zum Beispiel Stabilisatoren, Gleitmittel, Farbmittel, Nucleierungsmittel oder Antistatika enthalten.

Die erfindungsgemäßen flammfesten Polyester eignen sich zur Herstellung von Formkörpern, Filmen, Fäden und Fasem, z.B. durch Spritzgießen, Extrudieren oder Verpressen.

### Beispiele

1. Herstellung der 1-Methoxy-ethyl-methylphosphinsäure
1.1. Herstellung des Säurechlorids
   649 g (5,55 Mol) Dichlor-methylphosphan wurden auf 30°C erwärmt und innerhalb 3,5 Stunden unter Rühren und Kühlung 500 g (5,55 Mol) Acetaldehyddimethylacetal bei 30 - 40°C eingetropft. Dabei entwickelte sich lebhaft Methylchlorid. Nach Beendigung der Gasentwicklung wurde kurzzeitig auf 60°C erwärmt, dann wurde gekühlt und nachgerührt. Anschließend wurde destilliert. Man erhielt bei einer Siedetemperatur von 63°C bei 0,25 mbar 548 g 1-Methoxy-ethyl-methylphosphinsäurechlorid. Das entspricht einer Ausbeute von 64 % der Theorie.
1.2. Herstellung der Säure
   In 547,6 g (3,5 Mol) 1-Methoxy-ethyl-methylphosphinsäurechlorid wurden unter Kühlung und Rühren 126,1 g (7 Mol) Wasser vorsichtig zugetropft. Nach beendeter Zugabe wurde bei Raumtemperatur umgerührt und dann destilliert.
   Man erhielt 471 g bei einer Siedetemperatur von 135 - 138°C bei 0,1 mbar.
   Das entspricht einer Ausbeute von 97,5 % der Theorie.

2. Herstellung des Aluminiumsalzes der 1-Methoxy-ethyl-methylphosphinsäure 345 g (2,5 Mol) 1-Methoxy-ethyl-methylphosphinsäure wurden in 1,2 I Wasser gelöst und mit 65 g (0,83 Mol) Aluminiumhydroxid 72 Stunden bei 80 - 90°C gerührt. Dann wurde abgesaugt, mit Wasser gewaschen und bei 0,5 mbar zuerst bei 80°C, dann bei 180°C getrocknet. Man erhielt 334 g eines weißen Pulvers, das bei 350°C nicht schmilzt. Das entspricht einer Ausbeute von 92 % der Theorie.

| Ergebnis der Elementaranalyse: C₁₂H₃₀AlO₉P₃ (438) | | | | |
|---|---|---|---|---|
| berechnet | 32,9 % C | 6,85 % H | 6,17 % Al | 21,23 % P |
| gefunden | 33,0 % C | 7,05 % H | 5,9 % Al | 20,9 % P |

3. Herstellung der 1-Ethoxy-ethyl-methylphosphinsäure
3.1. Herstellung des Säurechlorids
   96,1 g (0,82 Mol) Dichlor-methylphosphan wurden auf -20°C gekühlt und innerhalb 3,5 Stunden unter Rühren und ständiger Kühlung 97 g (0,82 Mol) Acetaldehyddiethylacetal eingetropft. Nach beendetem Zutropfen ließ man auf Raumtemperatur kommen und rührte zwei Stunden nach. Dann wurde destilliert. Man erhielt bei einer Siedetemperatur von 65°C bei 0,75 mbar 87 g 1-Ethoxy-ethyl-methylphosphinsäurechlorid. Das entspricht einer Ausbeute von 62 % der Theorie.
3.2. Herstellung der Säure
   In 34 g (0,2 Mol) 1-Ethoxy-ethyl-methylphosphinsäurechlorid wurden bei 10°C unter Kühlung und Rühren 18 g (1,0 Mol) Wasser vorsichtig eingetropft. Nach beendeter Zugabe wurde bei Raumtemperatur eine Stunde nachgerührt und dann destilliert. Man erhielt 29,5 g bei einer Siedetemperatur von 136 - 138°C bei 0,35 mbar. Das entspricht einer Ausbeute von 97 % der Theorie.

4. Herstellung des Aluminiumsalzes der 1-Ethoxy-ethyl-methylphosphinsäure 297 g (1,95 Mol) 1-Ethoxy-ethyl-methylphosphinsäure und 50,7 g (0,65 Mol) Aluminiumhydroxid wurden in 1,2 I Wasser 75 Stunden bei 80 - 90°C gerührt. Dann wurde abgesaugt, mit Wasser nachgewaschen und zuerst bei 80°C dann bei 180°C bei 0,5 mbar getrocknet. Man erhielt 265 g eines weißen Pulvers mit einem Restwassergehalt von 0,06 %. Der Schmelzpunkt liegt oberhalb 350°C. Das entspricht einer Ausbeute von 85 % der Theorie.

| Ergebnis der Elementaranalyse: C₁₅H₃₆AlO₉P₃ (480) | | | | |
|---|---|---|---|---|
| berechnet | 37,5 % C | 7,5 % H | 5,69 % Al | 19,38 % P |
| gefunden | 36,9 % C | 7,4 % H | 5,5 % Al | 19,4 % P |

5. Herstellung der 1-Methoxy-ethyl-ethylphosphinsäure
5.1. Herstellung des Säurechlorids
   143,8 g (1,098 Mol) Dichlor-ethylphosphan wurden auf - 10 bis 15°C gekühlt und innerhalb 90 Minuten 99 g (1,099 Mol) Acetaldehyddimethylacetal zugetropft. Dann ließ man langsam auf Raumtemperatur kommen. Anschließend wurde 24 Stunden nachgerührt und danach destilliert. Man erhielt bei einer Siedetemperatur von 69°C bei 0,6 mbar 119 g 1-Methoxy-ethyl-ethylphosphinsäurechlorid. Das entspricht einer Ausbeute von 60 % der Theorie.
5.2. Herstellung der Säure erfolgte analog der Vorschrift von 1.2.
   Man erhielt die 1-Methoxy-ethyl-ethylphosphinsäure mit einem Siedepunkt von 146 - 151°C bei 0,25 mbar in ca. 95 %iger Ausbeute.

6. Herstellung des Aluminiumsalzes der 1-Methoxy-ethyl-ethylphosphinsäure
127 g (0,84 Mol) 1-Methoxy-ethyl-ethylphosphinsäure wurden in 400 ml Wasser mit 21,7 g (0,278 Mol) Aluminiumhydroxid 72 Stunden bei 80 - 90°C gerührt. Dann wurde abgesaugt, mit Wasser gewaschen und bei 0,5 mbar zuerst bei 80°C dann bei 180°C getrocknet. Man erhielt 96 g eines weißen Pulvers, das bis 350°C nicht schmilzt. Das entspricht einer Ausbeute von 72 % der Theorie.

| Ergebnis der Elementaranalyse: C₁₅H₃₆AlO₉P₃ (480) | | | | |
|---|---|---|---|---|
| berechnet | 37,5 % C | 7,5 % H | 5,63 % Al | 19,38 % P |
| gefunden | 37,5 % C | 7,1 % H | 5,3 % Al | 20,0 % P |

7. Verwendungsbeispiel
Aus dem Aluminiumsalz der 1-Methoxy-ethyl-methylphosphinsäure, hergestellt nach Beispiel 2, und Polybutylenterephthalat wurden mit 30 % Glasfasern verstärkte Compounds ohne weitere Zusätze hergestellt, Prüfkörper der Dichte 1,5 mm gespritzt und mit folgendem Ergebnis geprüft:

| Konzentration % | Brandklasse UL 94 |
|---|---|
| 20 | V1 |

## Patentansprüche

1. Aluminiumsalze der Alkyl-1-alkoxyethylphosphinsäuren der Formel 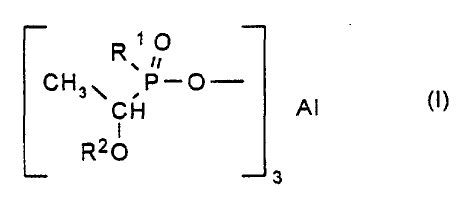 worin R¹ ein geradkettiger oder verzweigter Alkylrest mit 1 bis 6 Kohlenstoffatomen, vorzugsweise Methyl, Ethyl, n-Propyl, iso-Propyl, n-Butyl oder tert.-Butyl, und R² ein geradkettiger oder verzweigter Alkylrest mit 1 bis 4 Kohlenstoffatomen, vorzugsweise Methyl oder Ethyl, ist.

2. Verfahren zur Herstellung von Aluminiumsalzen von Alkyl-1-alkoxyethylphosphinsäuren gemäß Anspruch 1, **dadurch gekennzeichnet, daß** man Alkyl-1-alkoxyethylphosphinsäuren der Formel 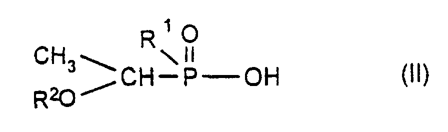 worin R¹ ein geradkettiger oder verzweigter Alkylrest mit 1 bis 6 Kohlenstoffatomen, vorzugsweise Methyl, Ethyl, n-Propyl, iso-Propyl, n-Butyl oder tert.-Butyl, und R² ein geradkettiger oder verzweigter Alkylrest mit 1 bis 4 Kohlenstoffatomen, vorzugsweise Methyl oder Ethyl, ist, mit Aluminiumhydroxid umsetzt.

3. Verfahren nach Anspruch 2, **dadurch gekennzeichnet, daß** das Molverhältnis von Alkyl-1-alkoxyethylphosphinsäuren zu Aluminiumhydroxid bei der Umsetzung ca. 3 : 1 ist.

4. Verfahren nach Anspruch 2 oder 3, **dadurch gekennzeichnet, daß** die Umsetzung unter Druck bei Temperaturen von 110 bis 250°C stattfindet.

5. Verwendung von Aluminiumsalzen von AlKyl-1-alkoxyethylphosphinsäuren gemäß Anspruch 1 als Flammschutzmittel in thermoplastischen Kunststoffen.

6. Verwendung von Aluminiumsalzen von Alkyl-1-alkoxyethylphosphinsäuren gemäß Anspruch 1 als Flammschutzmittel in Polyester, insbesondere in Polybutylenterephthalat.

7. Verwendung nach Anspruch 5 oder 6, wobei 5 bis 30 Gew.-%, bezogen auf das Polymer, Phosphinsäuresalz dem Polymer zugesetzt werden.

8. Verfahren zur Herstellung flammgeschützter Polyester, die Aluminiumsalze von Alkyl-1-alkoxyethylphosphinsäuren gemäß Anspruch 1 enthalten, **dadurch gekennzeichnet, daß** das Phosphinsäuresalz während der Polykondensation des Polyesters oder beim Aufschmelzen des Polyesters bei der Verarbeitung zugesetzt wird.

9. Verstärkte thermoplastische Kunststoffe enthaltend Aluminiumsalze der Alkyl-1-alkoxyethylphosphinsäuren gemäß Anspruch 1.

10. Verstärkte Polyester enthaltend 5 bis 30 Gew.-%, bezogen auf das Polymer, Aluminiumsalze der Alkyl-1-alkoxyethylphosphinsäuren gemäß Anspruch 1.

## Claims

1. An aluminum salt of an alkyl-(1-alkoxyethyl)-phosphinic acid of the formula 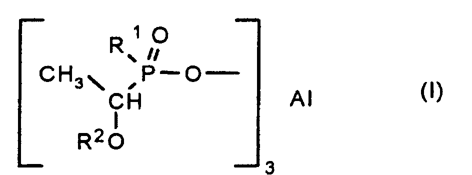 where R¹ is an unbranched or branched alkyl radical having 1 to 6 carbon atoms, preferably methyl, ethyl, n-propyl, isopropyl, n-butyl or tert-butyl, and R² is an unbranched or branched alkyl radical having 1 to 4 carbon atoms, preferably methyl or ethyl.

2. A process for preparing aluminum salts of alkyl-(1-alkoxyethyl)phosphinic acids as claimed in claim 1, which comprises reacting alkyl-(1-alkoxyethyl)phosphinic acids of the formula 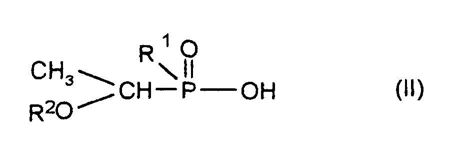 where R¹ is an unbranched or branched alkyl radical having 1 to 6 carbon atoms, preferably methyl, ethyl, n-propyl, isopropyl, n-butyl or tert-butyl, and R² is an unbranched or branched alkyl radical having 1 to 4 carbon atoms, preferably methyl or ethyl, with aluminum hydroxide.

3. The process as claimed in claim 2, wherein the molar ratio of alkyl-(1-alkoxyethyl)phosphinic acids to aluminum hydroxide in the reaction is approximately 3:1.

4. The process as claimed in claim 2 or 3, wherein the reaction takes place under pressure at temperatures of 110 to 250°C.

5. The use of aluminum salts of alkyl-(1-alkoxyethyl)-phosphinic acids as claimed in claim 1 as flame retardants in thermoplastics.

6. The use of aluminum salts of alkyl-(1-alkoxyethyl)phosphinic acids as claimed in claim 1 as flame retardants in polyester, in particular in poly(butylene terephthalate).

7. The use as claimed in claim 5 or 6, with 5 to 30% by weight of salt of phosphinic acid, based on the polymer, being added to the polymer.

8. A process for preparing low-flammability polyesters which comprise aluminum salts of alkyl-(1-alkoxyethyl)phosphinic acids as claimed in claim 1, which comprises adding the salt of phosphinic acid during the polycondensation of the polyester or in the melting of the polyester during the processing.

9. A reinforced thermoplastic comprising aluminum salts of alkyl-(1-alkoxyethyl)phosphinic acids as claimed in claim 1.

10. A reinforced polyester comprising 5 to 30% by weight, based on the polymer, of aluminum salts of alkyl-(1-alkoxyethyl)phospinic acids as claimed in claim 1.

## Revendications

1. Sels d'aluminium des acides alkyl-1-alcoxyéthylphosphiniques de formule 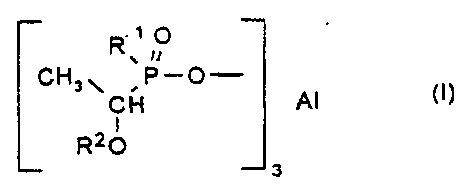 dans laquelle R¹ est un radical alkyle à chaîne droite ou ramifié ayant de 1 à 6 atomes de carbone, de préférence le groupe méthyle, éthyle, n-propyle, isopropyle, n-butyle ou tert-butyle, et R² est un radical alkyle à chaîne droite ou ramifié ayant de 1 à 4 atomes de carbone, de préférence le groupe méthyle ou éthyle.

2. Procédé pour la préparation de sels d'aluminium d'acides alkyl-1-alcoxyéthylphosphiniques selon la revendication 1, **caractérisé en ce qu'**on fait réagir avec de l'hydroxyde d'aluminium des acides alkyl-1-alcoxyéthylphosphiniques de formule 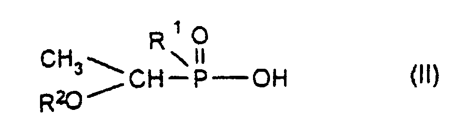 dans laquelle R¹ est un radical alkyle à chaîne droite ou ramifié ayant de 1 à 6 atomes de carbone, de préférence le groupe méthyle, éthyle, n-propyle, isopropyle, n-butyle ou tert-butyle, et R² est un radical alkyle à chaîne droite ou ramifié ayant de 1 à 4 atomes de carbone, de préférence le groupe méthyle ou éthyle.

3. Procédé selon la revendication 2, **caractérisé en ce que** le rapport molaire des acides alkyl-1-alcoxyéthylphosphiniques à l'hydroxyde d'aluminium dans la réaction est d'environ 3:1.

4. Procédé selon la revendication 2 ou 3, **caractérisé en ce que** la réaction a lieu sous pression, à des températures de 110 à 250°C.

5. Utilisation de sels d'aluminium d'acides alkyl-1-alcoxyéthylphosphiniques selon la revendication 1, en tant qu'agents ignifuges dans des matières synthétiques thermoplastiques.

6. Utilisation de sels d'aluminium d'acides alkyl-1-alcoxyéthylphosphiniques selon la revendication 1, en tant qu'agents ignifuges dans un polyester, en particulier dans du poly(butylène téréphtalate).

7. Utilisation selon la revendication 5 ou 6, dans laquelle on ajoute au polymère de 5 à 30 % en poids, par rapport au polymère, d'un sel d'acide phosphinique.

8. Procédé pour la préparation de polyesters ignifugés qui contiennent des sels d'aluminium d'acides alkyl-1-alcoxyéthylphosphiniques selon la revendication 1, **caractérisé en ce que** le sel d'acide phosphinique est ajouté lors de la transformation, pendant la polycondensation du polyester ou lors de la fusion du polyester.

9. Matières synthétiques thermoplastiques renforcées contenant des sels d'aluminium des acides alkyl-1-alcoxyéthylphosphiniques selon la revendication 1.

10. Polyesters renforcés contenant de 5 à 30 % en poids, par rapport au polymère, de sels d'aluminium des acides alkyl-1-alcoxyéthylphosphiniques selon la revendication 1.
